# EUROPÄISCHE PATENTSCHRIFT

(11) **EP 0 686 426 B1**
(45) Veröffentlichungstag und Bekanntmachung des Hinweises auf die Patenterteilung: **25.02.1998**
(21) Anmeldenummer: 95104271.2
(22) Anmeldetag: 23.03.1995
(51) Int. Cl.: B01J 19/30, C01B 31/08

(54) **Aus Kohlenstoff bestehende Füll- und Verteilerkörper für strömende Fluide**
Packing and distributing elements made of carbon for flowing fluids
Eléments de garnissage et de distribution en carbone pour fluides en mouvement

(30) Priorität: 01.06.1994 DE 4419114
(43) Veröffentlichungstag der Anmeldung: 13.12.1995
(73) Patentinhaber: SGL TECHNIK GMBH, 86405 Meitingen (DE)
(72) Erfinder: Künzel, Jürgen, Dr. Ing., D-86672 Thierhaupten (DE); Nedoschill, Manfred, Dipl.-Ing., D-86405 Meitingen (DE); Schmid, Manfred, D-86156 Augsburg (DE)

(56) Entgegenhaltungen:
- DE-A- 2 411 684
- DE-A- 4 108 031
- PATENT ABSTRACTS OF JAPAN vol. 12, no. 433 (C-543) 15. November 1988 & JP-A-63 159 213 (TADASHI IZUMI) 2. Juli 1988 & DATABASE WPI Section Ch, Week 8832, Derwent Publications Ltd., London, GB; Class E31, AN 88-224140 & JP-A-63 159 213 (T. IZUMI) 2. Juli 1988
- DATABASE WPI Section Ch, Week 9237, Derwent Publications Ltd., London, GB; Class E31, AN 92-305832 & KR-B-9 102 384 (HANIL CEMENT IND. CORP.) 20. April 1991

## Beschreibung

Die Erfindung betrifft ein Verfahren zur Herstellung von aus Kohlenstoff bestehenden Füll- und Verteilerkörpern für strömende Fluide, Füll- und Verteilerkörper aus Kohlenstoff für strömende Fluide und die Verwendung derartiger Füll- und Verteilerkörper.

Füll- und Verteilerkörper dienen in der Verfahrenstechnik dazu, relativ zu ihnen bewegte, mit ihnen in Berührung kommende Fluide, die auch im Gegenstrom geführt sein können, stets aufs Neue umzulenken, zu verteilen oder in vorgegebener Weise zu führen. Sie fungieren hierbei vorzugsweise als Hilfsmittel für Stoff- und Energieaustauschprozesse zwischen in gleichen oder verschiedenen Aggregatzuständen aneinander vorbei bewegten fluiden Stoffen oder Stoffsystemen. Bei diesen Prozessen können beispielsweise Stoffan- bzw. -abreicherungen, chemische Umsetzungen, Reinigungen oder die Kühlung oder Erwärmung von Fluiden stattfinden. Besonders zu nennen sind hier Verfahren wie die Destillation bzw. Rektifikation, Extraktion, Verdunstungskühlung aber auch das Ausscheiden von Substanzen aus Gasen. Die Apparate und Anlagen, in denen diese Prozesse durchgeführt werden, enthalten in der Austausch- bzw. Reaktionszone Einbauten, die durch ständiges Umleiten und Neuverteilen der am Prozeß beteiligten Fluide ständig neue Oberflächen- und Stoffkontakte herstellen. Die einfachste und sehr häufig verwendete Art Einbauten sind sogenannte Füllkörper, die im Apparat eine weitgehend regellose, z.B. durch Schütten oder Einschwemmen hervorgerufene oder auch eine geordnete Anordnung einnehmen können. Füllkörper sollen im allgemeinen eine möglichst große Oberfläche haben, den mechanischen Beanspruchungen beim Hantieren und im Betrieb durch eine ausreichende Druck- und Abriebfestigkeit gewachsen sein, gegenüber den Medien, mit denen sie beaufschlagt werden, chemisch stabil sein, desweiteren ein möglichst geringes Gewicht haben, um das Gewicht der aus ihnen gebildeten Säule in Grenzen zu halten und kostengünstig sein. Die am häufigsten verwendeten Füllkörper bestehen aus Glas, Keramik, Metall oder Kunststoff. Ihre Gestalt entspricht häufig einem Zylindermantel ohne oder mit Durchbrechungen, wobei diese Formen zusätzlich Einbauten haben können (Raschig-Ringe, Infos-Ringe, Pall-Ringe, Bialecki-Ringe) (Ullmann's Encyclopedia of Industrial Chemistry, fifth Ed., VCH Publishers, Vol. B3, page 4-84). Andere Füllkörper haben Sattelform (Berl-Sattel, Novalox-Sattel, Intalox-Sattel) (siehe oben stehende Literaturstelle), förderschneckenförmige Oberflächen oder weisen Spiral- oder von anderen geometrischen Körpern abgeleitete Formen auf. Wenn die Aufgabe gestellt ist, Füllkörper oder andere Einbauten unter stark korrosiven Bedingungen oder bei hohen Temperaturen zu verwenden, ist für den Fachmann die Wahl eines geeigneten Werkstoffs häufig schwierig. Metallische Füllkörper sind häufig auch bei Anwendung teurer Sonderlegierungen nur begrenzt beständig, Kunststoff-Füllkörpern mangelt es an Temperaturstabilität und an Chemikalienbeständigkeit, z.B. gegen organische oder verseifend wirkende Medien und die Füllkörper aus Keramik werden durch Alkalien, bestimmte Mineralsäuren und fluorhaltige Agenzien angegriffen und sie weisen eine schlechte Wärmeleitfähigkeit auf. Ein weiterer Nachteil metallischer und keramischer Füllkörper ist ihr hohes Gewicht.

Viele der Korrosions- und Gewichtsprobleme könnten durch Verwendung von Füllkörpern aus Kohlenstoff, wobei der Begriff Kohlenstoff nicht graphitierten Kohlenstoff und Graphit gleichermaßen einschließt, gelöst werden. Kohlenstoff ist gegen fast alle Säuren, Alkalien und organischen Agenzien beständig. Er wird nur durch stärkste Oxidationsmittel angegriffen. Anwendungen von Kohlenstoff in der Verfahrenstechnik sind auch seit langem bekannt (z.B. Winnacker und L. Küchler, Chemische Technologie, Band 1, Anorganische Technologie I, S. 504, Carl Hanser Verlag München, 1970). Desgleichen sind Füllkörper in Form von Raschig- oder Pall-Ringen aus Kohlenstoff bekannt. Nachteilig an diesen Komponenten aus Kohlenstoff ist ihr hoher Preis, der bis in die Nähe von Sonderlegierungen reicht. Ein weiterer Nachteil der bis jetzt bekannten Füllkörper aus Kohlenstoff liegt herstellungsbedingt in ihren vergleichsweise großen Wandstärken und in der Unmöglichkeit, kompliziertere Formen in geringeren Materialstärken und Baugrößen kostengünstig herzustellen.

Der Erfindung lag deshalb das technische Problem zugrunde, ein Verfahren zu schaffen, mit Hilfe dessen preiswerte, auch kompliziert geformte und im Vergleich zu bisher bekannten Füllkörpern aus Kohlenstoff auch dünnwandige Füll- und Verteilerkörper aus Kohlenstoff hergestellt werden können.

Unter dem Begriff Kohlenstoff im Sinne dieser Schrift wird stets sowohl karbonisierter, nicht graphitischer Kohlenstoff als auch Graphit verstanden, es sei denn, es ist im Einzelfall ausdrücklich etwas anderes dazu ausgeführt.

Das technische Problem wird durch die kennzeichnenden Merkmale des Patentanspruchs 1 gelöst. Die Ansprüche 2 bis 13, die hiermit in die Beschreibung eingeführt werden, enthalten Ausgestaltungen des Anspruchs 1. Mit Anspruch 14 wird Schutz für erfindungsgemäße Füll- und Verteilerkörper und mit Anspruch 15 Schutz für eine bevorzugte Art von Verwendungen solcher Füll- und Verteilerkörper begehrt.

Ein wichtiges Merkmal der Erfindung ist es, daß im wesentlichen nachwachsende Rohstoffe, nämlich Getreide jeder Art und als Bindemittel vorzugsweise Wasser für die Herstellung der Füll- und Verteilerkörper - im folgenden nur mehr Füllkörper genannt - verwendet werden. Beispiele für erfindungsgemäß verwendbare Getreidesorten sind Weizen, Roggen, Gerste, Mais, Reis, Hafer, Hirse, Dinkel, Buchweizen etc.. Bevorzugtes Ausgangsmaterial ist Weizen. Das Getreide wird nach üblichen Methoden gemahlen und das Mahlgut mit einem Bindemittel gemischt, bis eine zusammenhängende, plastische Masse entsteht. Das gemahlene Getreide kann als solches, d. h. ohne weitere Fraktionierung oder es können Fraktionen des Mahlgutes verwendet werden. Vorzugsweise werden die stärkehaltigen Fraktionen wie Mehl oder Grieß eingesetzt. Besonders bevorzugt ist die Verwendung von Hartweizengrieß und Weichweizengrieß. Hartweizengrieß ergibt nach dem Mischen mit dem Bindemittel nicht so geschmeidige aber steifere Massen, während Weichweizengrieß Massen mit besserer Fließfähigkeit ergibt. Weichweizengrieß wird deshalb bevorzugt für die Herstellung komplizierterer Teile eingesetzt.

Als Bindemittel können alle Stoffe mit Bindefähigkeit verwendet werden, mit denen nach dem hier beschriebenen Verfahren aus einem Mischgut geformte Teile hergestellt werden können, die nach einem Härtungs- oder Trocknungsprozeß durch Temperatureinwirkung nicht mehr erweicht werden können und die bei dem auf den Härtungs- und Trocknungsprozeß folgenden Carbonisierungs- oder Verkokungsschritt keine verkokbaren Substanzen in flüssiger Form mehr ausschwitzen. Das hat zur Folge und ist ein vorteilhaftes Merkmal der Erfindung, daS die Formkörper ohne ein sie umgebendes und stützendes Schüttpulver verkokt werden können. Es fällt dadurch nicht nur der gesamte mit dem Arbeiten mit Schüttpulver verbundene Aufwand, sondern auch das Putzen der Füllkörper nach dem Verkoken weg, das beim Arbeiten mit pechgebundenen Massen nach dem Stand der Technik sehr aufwendig ist. In Verbindung mit der Verwendung von preiswerten Getreiderohstoffen bedeutet die vorstehend beschriebene Verfahrensweise eine wesentliche Vereinfachung und eine erhebliche Verringerung des Aufwands. Erweichbare Peche sind nach dem Vorstehenden als Bindemittel ungeeignet. Verwendet werden können beispielsweise alle härtbaren Harze wie Phenolformaldehyd- oder Furanharze bzw. deren Zubereitungen. Bevorzugtes Bindemittel ist jedoch Wasser, das wohl das preiswerteste und zudem überall verfügbare und umweltfreundlichste Bindemittel darstellt. Die dem Trockengut zugesetzte Menge Wasser beträgt vorzugsweise 10 bis 55 Gewichtsprozent.

Das Mischen von Mahlprodukt und gegebenenfalls zugesetzten Füllstoffen mit dem jeweils verwendeten Bindemittel oder Bindemittelsystem geschieht in allgemein bekannten Zwangsmischern wie z.B. Z-Arm-Knetern, Doppelschneckenmischern oder Schnellmischern (Eirich, Lödige). Es wird solange gemischt, bis eine plastische, formbare Masse entstanden ist. Nach den bevorzugten Vorgehensweisen werden die Mischer ohne zusätzliche Heizung betrieben. Falls es die Umstände erfordern, kann das Mischgut auch temperiert werden.

Nach dem Mischen wird das Mischgut zu Formkörpern verarbeitet, die bereits die Form, nicht aber die Abmessungen der fertigen Füllkörper haben. Da die Formkörper beim späteren Umwandeln in Kohlenstoff, dem Verkoken oder Carbonisieren, in der Größenordnung von 35 bis 75 Volumenprozent schrumpfen, müssen sie beim Formen entsprechend größere Abmessungen erhalten. Das Formgeben kann durch Extrudieren, Kalandrieren oder Stanzen mit allen dafür geeigneten Maschinen und Apparaten, wie beispielsweise Strangpressen, Schneckenextrudern, Gesenkpressen, Stanzen oder Formwalzen vorgenommen werden. Die herstellbaren Formen reichen von einfachen zylindrischen Ringen, Ringen mit sich in das Ringinnere erstreckenden Eindrückungen aus der Ringwand (Pall-Ringe), Ringen mit speichenradähnlichen oder rasterähnlichen, kanalartigen Einbauten über Sattelformen bis zu Spiralen oder auch zu regelmäßigen Formen, die zu einer geordneten Packung zusammengesetzt werden können. Formen der angegebenen Art sind im Prinzip bekannt und können der einschlägigen Literatur (z.B. Ullmann's Encyclopedia of Industrial Chemistry, fifth Ed., VCH Publishers, Vol. 3, page 4-84) oder Firmenschriften (z.B. der Firma Vereinigte Füllkörperfabriken, 56230 Ransbach-Baumbach) entnommen werden. Hervorzuheben ist, daß nach diesem Verfahren auch sehr dünnwandige Formkörper mit Wandstärken von ca. 1 mm hergestellt werden können.

Nach dem Formen werden die Körper gehärtet. In diesem Verfahrensschritt wird entweder der Wassergehalt der Formkörper soweit gesenkt, daß sie ohne zu brechen nicht mehr verformt werden können oder es wird ein gegebenenfalls vorhandenes anderes, z.B. harzhaltiges Bindersystem gehärtet. Das Härten kann in den meisten Fällen bei Raumtemperatur geschehen. Zur Beschleunigung des Prozesses arbeitet man jedoch zweckmäßigerweise mit einer Warmlufthärtung oder -trocknung, wobei die angewendeten Temperaturen und Temperaturgradienten dem zu härtenden Material angepaßt sein müssen. Diese Bedingungen sind durch einfache Vorversuche für den Fachmann leicht feststellbar. Beispielsweise beträgt bei Formkörpern auf Basis Hartweizengrieß mit einem Wassergehalt von 30 bis 35 Gewichtsprozent die Trocknungszeit zwischen 12 und 18 Stunden, wobei zunächst 6 bis 10 Stunden mit Luft von 45 bis 50 °C getrocknet und darauf folgend je 4 Stunden mit Luft von 50 bis 60 °C und 60 bis 70 °C getrocknet wird, bis ein formstabiler, für das Verkoken geeigneter Körper vorliegt. Bei Verwendung von Wasser als Binder beträgt der Restwassergehalt nach dem Härten bei einem solchen Körper 5 bis 20 Gewichtsprozent, bei Verwendung harzhaltiger Binder entsprechend weniger.

Nach dem Härten werden die Formkörper verkokt. Dieser Verfahrensschritt muß unter Ausschluß oxidierend wirkender Medien wie z.B. Sauerstoff, Kohlendioxid oder Wasser geschehen. Da die Formkörper beim Aufheizen nicht mehr erweichen, kann das Verkoken ohne stützende Packmasse geschehen. Auf die Vorteile dieser Verfahrensweise wurde im Vorstehenden bereits hingewiesen. Um Oxidationen zu verhindern, muß jedoch in einer Schutzgasatmosphäre verkokt werden. Bei diesem Verfahrensschritt finden Entgasungs- und kombinierte Zersetzungs- und Entgasungsvorgänge statt, die je nach zu verkokendem Material einen Gewichtsverlust von bis zu 75 % bewirken. Außerdem schrumpfen die Formkörper um bis zu 75 Volumenprozent. Dadurch wird ihre Wandstärke entsprechend weiter verringert, so daß beispielsweise kompliziert aufgebaute Füllkörper mit Wandstärken bis zu 0,5 mm hergestellt werden können. Da mit diesen Entgasungs- und Schrumpfungsvorgängen auch erhebliche mechanische Belastungen einhergehen, darf die Temperatursteigerungsrate im Verlauf dieses Verfahrensschrittes nicht zu groß sein. Deshalb soll insbesondere im Bereich von 250 bis 400 °C nicht mit Gradienten von mehr als 100 K/h gefahren werden. Vor und nach diesem kritischen Bereich können höhere Gradienten angewandt werden. Vorzugsweise wird jedoch mit niedrigeren Gradienten gearbeitet, die im Bereich von 10 bis 30 K/h oder darunter liegen und über den gesamten Temperaturbereich von Raumtemperatur bis zur Endtemperatur angewandt werden können. Es ist auch vorteilhaft, in der Anfangsphase, die bis ca. 400 °C Produkttemperatur reicht, mit einem geringen Gradienten von bis zu 15 K/h zu fahren und danach die Temperatursteigerungsrate sukzessive auf 100 bis 150 K/h in der Endphase zu steigern. Die Mindesttemperatur, die beim Verkoken erreicht werden muß, beträgt 600 °C. Vorzugsweise wird bis zu Temperaturen von 800 bis 1000 °C verkokt. Man erhält dadurch Füllkörper aus koksartigem Kohlenstoff, die eine große mechanische Festigkeit und Resistenz gegen Abrasion bei vergleichsweise geringer Wärme- und elektrischer Leitfähigkeit besitzen. Es ist jedoch auch möglich, die Temperatur im Rahmen des Verkokungsschritts oder in einem diesem nachgeschalteten Schritt auf Temperaturen bis 3000 °C zu steigern. Man erhält dann graphitierte Füllkörper, die gegenüber nur bei 1000 °C behandelten Körpern dieser Art bei nur geringfügig verringerter mechanischer Festigkeit und Abrasionsbeständigkeit eine bessere Wärme- und elektrische Leitfähigkeit haben. Der Grund für den nur geringen Abfall der Festigkeit und der Abrasionsbeständigkeit ist die schlechte Graphitierbarkeit des hier vorliegenden Kohlenstoffs, der dem sogenannten glasartigen Kohlenstoff mit einer dreidimensional vernetzten Struktur der C-Atome sehr nahe kommt.

Bei Anwendung der bevorzugten Variante dieses Verfahrens, nämlich der Herstellung von Füllkörpern nur aus z.B. Grieß und Wasser fallen beim Verkoken als Nebenprodukte vorteilhafterweise nur leicht beherrschbare, weitgehend unkritische Gase wie Wasser, Kohlenoxide und niedermolekulare Alkane wie Methan und Äthan an. Kondensierte Kohlenwasserstoffe mit carzinogenem Potential, die beim Verkoken von mit Pech gebundenen Füllkörper-Rohlingen stets anfallen, wurden hier nicht beobachtet.

Dem aus Getreide gewonnenen Trockengut oder der Mischung aus diesem Trockengut und einem Bindemittel können noch weitere Füllstoffe zugesetzt werden. Als Füllstoffe für diesen Zweck kommen nur Substanzen in Frage, die nach dem Verkoken einen Aschegehalt von nicht mehr als 15 Gewichtsprozent haben. Ihr Kohlenstoffgehalt kann in weiten Grenzen schwanken. Beispiele für bevorzugte Füllstoffe dieser Art sind Koks- oder Graphitpulver, Ruß, Holzmehl, Torfmehl, Cellulosepulver oder Kohlenstaub. Durch Zusatz dieser Substanzen kann die Verarbeitbarkeit der Produkte beim Durchlaufen der einzelnen Herstellungsschritte verbessert und es kann die Ausbildung der Eigenschaften der Füllkörper beeinflußt werden. Der Fachmann auf dem Gebiet der Kohlenstofftechnik kann die Wirkung des Zusatzes der verschiedenen Füllstoffe abschätzen. Beispielsweise wird durch einen entsprechenden Zusatz von Kohlenstoffpulver das Ausmaß der Schrumpfung der Formkörper beim Verkoken verringert, ohne daß sich die Festigkeit des Fertigprodukts wesentlich verändert. Ein Zusatz von Holz-, Torfmehl oder Cellulosepulver vermehrt die Anzahl offener Poren in den Füllkörpern, während ein Zusatz von Kohlenstaub einer backenden Kohle die offene Porosität und die Festigkeit des Endprodukts vergrößert.

Zur Verbesserung der Verarbeitbarkeit können den Komponenten, die gemischt werden sollen, vor dem Mischen oder während des Mischens Verarbeitungshilfsmittel zugesetzt werden. Derartige Mittel dienen z.B. zur Steuerung der Benetzbarkeit der zu mischenden Komponenten, zur Verbesserung des Fließverhaltens der Masse beim Formen, zur Erhöhung der Standfestigkeit der Masse nach dem Formen etc.. Es sind dies Mittel, die dem Fachmann aus verwandten Industriezweigen, z.B. der Keramikindustrie und der dieser verwandten Kohlenstofftechnik wohlbekannt sind. Beispiele sind synthetische oder natürliche Öle oder Fettsäuresalze wie Stearate als Preß- oder Fließhilfsmittel, Sulfonate wie z.B. Alkylbenzolsulfonate, Fettalkoholsulfate, Amin- und Ammoniumverbindungen mit Alkyl- oder Alkylarylresten, Fettalkoholderivate oder Polyglykole als Benetzungshilfen oder Emulgatoren und Cellulosederivate wie Hydroxypropylcellulose als Verdickungs- und Stabilisierungsmittel. Diese Mittel werden nur in geringen Mengen zugesetzt.

Die erfindungsgemäßen Füllkörper werden in Anlagen zum Stoff- und/oder Wärmeaustausch beispielsweise in Destillations-, Rektifikations-, Extraktions-, Heiz- oder Kühlanlagen oder in Anlagen zum Abscheiden von Flüssigkeiten aus Gasen oder zum Vermischen oder Leiten von Fluiden verwendet.

Die Vorteile der Erfindung sind folgende:
Schaffung einer Möglichkeit zur aufwandsarmen Herstellung von Füllkörpern aus Kohlenstoff durch Verwendung kostengünstiger Ausgangsstoffe und durch Einsparung des Arbeitens mit Schüttpulver im Verkokungsschritt sowie des Putzens nach dem Verkoken.
Schaffung einer kostengünstigen Möglichkeit zur Herstellung von komplizierten Füllkörperformen mit ausreichender Festigkeit bis herab zu Wandstärken von 0,5 mm.
Schaffung eines umweltfreundlichen Verfahrens zur Herstellung von Füllkörpern aus Kohlenstoff durch Verwendung nachwachsender Rohstoffe und von im wesentlichen Wasser als Bindemittel, wobei diese Rezeptbestandteile beim thermischen Abbau entweder unschädliche oder leicht zu beseitigende Stoffe abgeben.

Die Erfindung wird im folgenden anhand eines Ausführungsbeispiels erläutert. Sie ist jedoch nicht auf dieses Beispiel beschränkt.
Käuflicher Hartweizengrieß mit einem produktbedingten Wassergehalt von 14,5 - 15 Gewichtsprozent und einer Kornzusammensetzung von

| | |
|---|---|
| > 650 µm | 0,4 Gew.-% |
| > 400 bis 650 µm | 33,4 Gew.-% |
| > 112 bis 400 µm | 54,0 Gew.-% |
| < 112 µm | 12,2 Gew.-% |

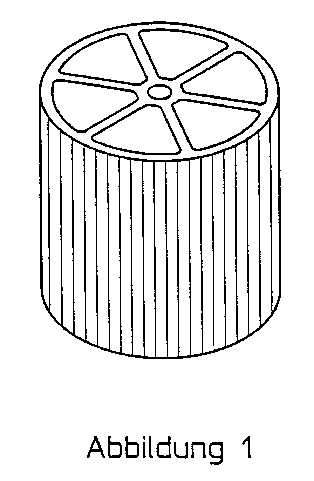

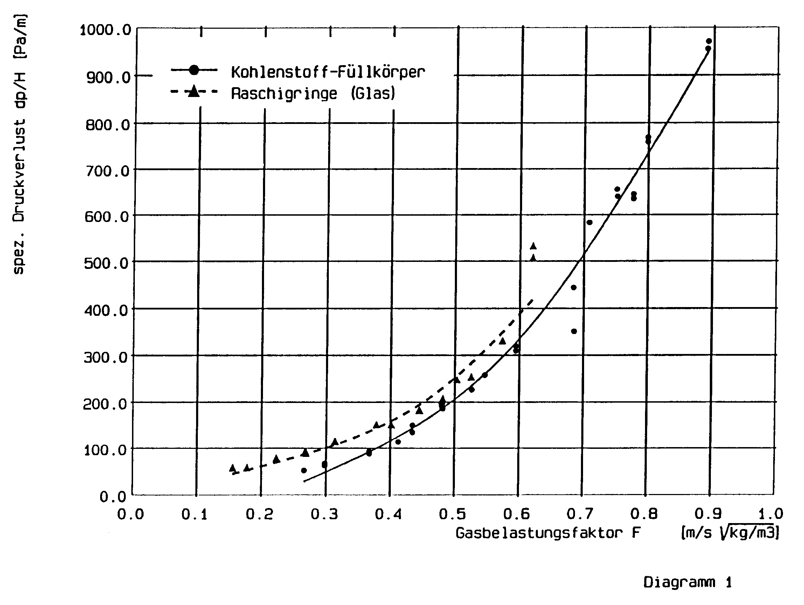

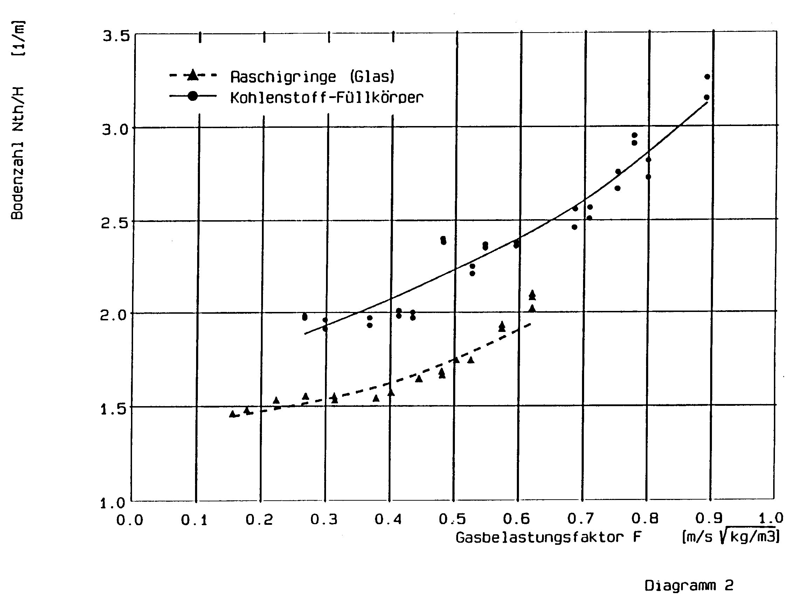

wurden unter Zusatz von 15 Gewichtsprozent Leitungswasser in Trinkwasserqualität, bezogen auf die eingesetzte Menge Grieß in einem mit Förder- und Stauzonen ausgerüsteten Zweiwellenschneckenextruder gemischt und durch ein entsprechend geformtes Mundstück extrudiert. Mischen und Extrudieren geschahen ohne zusätzliche Heizung. Der formende Bereich des Mundstücks hatte eine zylindrische Form mit 6 in Abstand voneinander und im Abstand von der Zylinderwand angeordneten Kreissegmenten und einem zentrischen Dorn, so daß ein hohlzylindrischer Strang mit 6 flügelzellenartigen Einbauten, die mit einer zentrischen hohlen Achse verbunden waren, extrudiert werden konnte. Kurz hinter dem Mundstück wurde dieser Strang in Abschnitte von der Länge bzw. Höhe entsprechender Formkörper-Rohlinge geteilt. Ein Formkörper dieser Art ist in Abb. 1 schematisch wiedergegeben. Der äußere Durchmesser dieses Preßlings betrug ca. 23 mm, seine Höhe ca. 23 mm und die Wandstärke des Zylindermantels und der Flügel ca. 2 mm. Der zentrische Dorn hatte einen Außendurchmesser von ca. 6,5 mm und einen Innendurchmesser von ca. 3,5 mm. Die extrudierten Formkörper wurden in einem Umlufttrockenschrank in drei Stufen nach dem folgenden Temperatur/Zeitprogramm auf einen Restwassergehalt von 12,7 Gewichtsprozent getrocknet und dabei gehärtet.
1. Stufe: 8 Std. bei 45-50 °C (Endtemperatur 50 °C)
2. Stufe: 4 Std. bei 50-60 °C (Endtemperatur 60 °C)
3. Stufe: 4 Std. bei 60-70 °C (Endtemperatur 70 °C)

Nach dem Härten/Trocknen waren die Körper formstabil und problemlos manipulierbar. Die gehärteten Formkörper wurden sodann in einem Schutzgasofen mit Stickstoff als Schutzgas ohne Verwendung von die Formkörper umgebendem Kohlenstoffschüttpulver nach folgendem Zeit-Temperaturprogramm verkokt:

### Aufheizen

- in 133: Stunden linear von Raumtemperatur auf 400 °C (Temperaturgradient 3 K/h),
- in 40: Stunden linear von 400 °C auf 600 °C (Temperaturgradient 5 K/h),
- in 20: Stunden linear von 600 °C auf 900 °C (Temperaturgradient 15 K/h).

Die nach dem Abkühlen unter Schutzgas erhaltenen Formkörper hatten einen Gewichtsverlust von 75 % erlitten und waren auf die Maße, Außendurchmesser 15 mm, Höhe 15 mm, Wandstärken 1 bis 1,5 mm geschrumpft. An den Füllkörpern wurden folgende gemittelte Kenndaten gemessen:

| | | |
|---|---|---|
| Rohdichte (DIN 51918): | | 1,29 g/cm³ |
| Dichte (DIN 51901): | | 1,75 g/cm³ |
| Porenvolumen (offen) (DIN 51918): Druckfestigkeit am ganzen | | 20 % |
| Körper gemessen (DIN 51910): | axial: | 40 N |
| | radial: | 450 N |

Für eine freie Schüttung der Füllkörper wie sie sich z.B. beim Einfüllen in eine Destillationskolonne ergibt, wurden folgende Werte ermittelt:

| | |
|---|---|
| Schüttdichte: | 240 kg/m³ |
| Volumenbezogene Oberfläche der Schüttung: | 445 m²/m³ |
| freies Volumen der Schüttung: | 68 % |

Die Brauchbarkeit von nach dem Ausführungsbeispiel hergestellten Füllkörpern wurde in einer Destillationskolonne mit einem Kolonnendurchmesser von 200 mm und einer Füllkörperpackungshöhe von 1900 mm und den oben angegebenen Daten für die Oberfläche der Schüttung und das freie Volumen der Schüttung am System Cyclohexan/n-Heptan im Vergleich zu Raschig-Ringen aus Glas, Abmessungen 20 mm Durchmesser, 20 mm Höhe, getestet. Die Ergebnisse sind in den Diagrammen 1 und 2 wiedergegeben. Aus Diagramm 1 ist zu entnehmen, daß der spezifische Druckverlust dp pro Einheit der Säulenhöhe in Metern demjenigen der Raschig-Ringe entspricht. In Diagramm 2 ist die theoretische Bodenzahl gegen den Dampfbelastungsfaktor aufgetragen. Die Füllkörper aus Kohlenstoff zeigen hier eindeutig eine bessere Trennwirkung als die als Vergleich fungierenden Raschig-Ringe. Mit den hier dargestellten Testergebnissen ist die technische Brauchbarkeit erfingungsgemäßer Füllkörper unter Beweis gestellt.

## Patentansprüche

1. Verfahren zur Herstellung von im wesentlichen aus Kohlenstoff bestehenden Füll- und Verteilerkörpern für strömende Fluide,
dadurch gekennzeichnet, daß
nacheinander
a) Getreide gemahlen wird,
b) das Mahlprodukt oder ein Teil des Mahlprodukts mit einem Bindemittel gemischt wird, bis eine plastische, formbare Masse entsteht,
c) die plastische Masse zu Vorproduktkörpern geformt wird, die bis auf die geometrischen Abmessungen die Form der späteren Füll- und Verteilerkörper haben,
d) die Vorproduktkörper gehärtet und getrocknet werden,
e) die gehärteten und getrockneten Formkörper unter Abwesenheit von oxidierend wirkenden Medien verkokt werden.

2. Verfahren nach Patentanspruch 1,
dadurch gekennzeichnet, daß
in Verfahrensschritt b) als Bindemittel Wasser verwendet wird.

3. Verfahren nach Patentanspruch 2,
dadurch gekennzeichnet, daß
das in Verfahrensschritt b) eingesetzte, gemahlene Produkt mit 10 bis 55 Gewichtsprozent Wasser, bezogen auf die eingesetzte Menge Mahlprodukt, gemischt wird.

4. Verfahren nach einem oder mehreren der Patentansprüche 1 bis 3,
dadurch gekennzeichnet, daß
in Verfahrensschritt b) Grieß als Mahlprodukt verwendet wird.

5. Verfahren nach Patentanspruch 4,
dadurch gekennzeichnet, daß
in Verfahrensschritt b) Hartweizengrieß als Mahlprodukt verwendet wird.

6. Verfahren nach Patentanspruch 4,
dadurch gekennzeichnet, daß
in Verfahrensschritt b) Weichweizengrieß als Mahlprodukt verwendet wird.

7. Verfahren nach einem oder mehreren der Patentansprüche 1 bis 6,
dadurch gekennzeichnet, daß
in Verfahrensschritt c) die plastische Masse extrudiert wird und der extrudierte Strang in Stücke festgelegter Länge geteilt wird.

8. Verfahren nach einem oder mehreren der Patentansprüche 1 bis 6,
dadurch gekennzeichnet, daß
in Verfahrensschritt c) die plastische Masse mit Hilfe von Formwalzen zu Vorproduktkörpern geformt wird.

9. Verfahren nach einem oder mehreren der Patentansprüche 1 bis 8
dadurch gekennzeichnet, daß
in Verfahrensschritt d) die Formkörper auf einen Restwassergehalt von 5 bis 20 Gewichtsprozent getrocknet werden.

10. Verfahren nach einem oder mehreren der Patentansprüche 1 bis 9,
dadurch gekennzeichnet, daß
im Verfahrensschritt e) eine Behandlungsendtemperatur von mindestens 600 °C angewandt wird.

11. Verfahren nach einem oder mehreren der Patentansprüche 1 bis 9,
dadurch gekennzeichnet, daß
im Verfahrensschritt e) eine Behandlungsendtemperatur von mindestens 1000 °C und höchstens 3000 °C angewandt wird.

12. Verfahren nach einem oder mehreren der Patentansprüche 1 bis 11,
dadurch gekennzeichnet, daß
dem in Verfahrensschritt b) eingesetzten, aus Getreide erzeugten gemahlenen Produkt in einer Menge von bis zu 60 Gewichtsprozent, bezogen auf die Menge des aus Getreide erzeugten, eingesetzten gemahlenen Produkts Füllstoffe zugesetzt werden, deren Ascherückstand nach einer Temperaturbehandlung gemäß Verfahrensschritt e) nicht mehr als 15 Gewichtsprozent beträgt.

13. Verfahren nach einem oder mehreren der Patentansprüche 1 bis 12,
dadurch gekennzeichnet, daß
den in Verfahrensschritt b) eingesetzten, zu mischenden Komponenten Verarbeitungshilfsmittel aus der Gruppe der Preß-, Fließhilfsmittel, der Benetzungshilfen, Emulgatoren, Stabilisatoren zugesetzt werden.

## Claims

1. Process for manufacturing filler and distributing bodies essentially of carbon for flowing fluids,
characterized in that in sequence
a) cereal is ground
b) the ground product or a portion of the ground product is mixed with a binder until a plastic, mouldable composition is produced
c) the plastic composition is formed into primary product bodies which have the shape of the later filler and distributing bodies, apart from the geometrical dimensions
d) the primary product bodies are hardened and dried
e) the hardened and dried moulded bodies are coked in the absence of media with an oxidizing effect.

2. Process according to Claim 1, characterized in that water is used as binder in process step b).

3. Process according to Claim 2, characterized in that the ground product used in process step b) is mixed with 10 to 55 per cent by weight of water, related to the amount of ground product used.

4. Process according to one or more of Claims 1 to 3, characterized in that semolina is used as ground product in process step b).

5. Process according to Claim 4, characterized in that hard wheat semolina is used as ground product in process step b).

6. Process according to Claim 4, characterized in that soft wheat semolina is used as ground product in process step b).

7. Process according to one or more of Claims 1 to 6, characterized in that, in process step c), the plastic composition is extruded and the extruded strand is divided into pieces of specified length.

8. Process according to one or more of Claims 1 to 6, characterized in that, in process step c), the plastic composition is shaped into primary product bodies with the aid of moulding rolls.

9. Process according to one or more of Claims 1 to 8, characterized in that, in process step d), the moulded bodies are dried to a residual water content of 5 to 20 per cent by weight.

10. Process according to one or more of Claims 1 to 9, characterized in that, in process step e), a final treatment temperature of at least 600 °C is used.

11. Process according to one or more of Claims 1 to 9, characterized in that, in process step e), a final treatment temperature of at least 1000 °C and no more than 3000 °C is used.

12. Process according to one or more of Claims 1 to 11, characterized in that fillers whose ash residue after a temperature treatment according to process step e) is no more than 15 per cent by weight are added to the ground product produced from cereal and used in process step b), in a quantity of up to 60 per cent by weight, related to the quantity of the ground product produced from cereal that is used.

13. Process according to one or more of Claims 1 to 12, characterized in that processing auxiliaries from the group of moulding auxiliaries, flow auxiliaries, wetting aids, emulsifiers, stabilizers are added to the components to be mixed and used in process step b).

## Revendications

1. Procédé de fabrication de corps de garnissage et de distribution se composant essentiellement de carbone pour des fluides en mouvement,
caractérisé en ce que
l'un après l'autre
a) les céréales sont moulues
b) le produit moulu ou une partie du produit moulu est mélangé avec un liant, jusgu'à obtention d'une masse plastique, susceptible d'être formée,
c) la masse plastique est mise en forme en corps d'avant produit, qui ont jusqu'aux dimensions géométriques la forme des corps de garnissage et de distribution ultérieure,
d) les corps d'avant produit sont durcis et séchés,
e) les corps de forme durcis et séchés sont cokéfiés en l'absence de milieux agissants par oxydation.

2. Procédé selon la revendication 1,
caractérisé en ce que
dans l'étape de procédé b) on utilise l'eau comme liant.

3. Procédé selon la revendication 2,
caractérisé en ce que
dans l'étape de procédé b) le produit mis en oeuvre, moulu est mélangé avec 10 à 55 % en poids d'eau, par rapport à la quantité de produit moulu utilisé.

4. Procédé selon une ou plusieurs des revendications 1 à 3,
caractérisé en ce que
dans l'étape de procédé b) la semoule est utilisée comme produit moulu.

5. Procédé selon la revendication 4,
caractérisé en ce que
dans l'étape de procédé b) on utilise de la semoule de blé dur comme produit moulu.

6. Procédé selon la revendication 4,
caractérisé en ce que
dans l'étape de procédé b) on utilise de la semoule de blé tendre comme produit moulu.

7. Procédé selon une ou plusieurs des revendications 1 à 6,
caractérisé en ce que
dans l'étape de procédé c) la masse plastique est extrudée et le cordon extrudé est divisé en morceaux de longueur déterminée.

8. Procédé selon une ou plusieurs des revendications 1 à 6,
caractérisé en ce que
dans l'étape de procédé c) la masse plastique est formée en corps d'avant produit à l'aide de rouleaux de formage.

9. Procédé selon une ou plusieurs des revendications 1 à 8,
caractérisé en ce que
dans la phase de procédé d) les corps de forme sont séchés à un teneur résiduelle en eau de 5 à 20 %.

10. Procédé selon une ou plusieurs des revendications 1 à 9,
caractérisé en ce que
dans l'étape de procédé e) on utilise une température de traitement d'au moins 600°C.

11. Procédé selon une ou plusieurs des revendications 1 à 9,
caractérisé en ce que
dans l'étape de procédé e) on utilise une température de traitement d'au moins 1000°C et au maximum de 3000°C.

12. Procédé selon une ou plusieurs des revendications 1 à 11,
caractérisé en ce qu'
au produit moulu obtenu à partir de céréales, mises en oeuvre dans l'étape de procédé b) on ajoute, en une quantité de jusqu'à 60 % en poids du produit provenant des céréales, mis en oeuvre moulu, des matières de charge, dont le résidu en cendres après un traitement thermique selon l'étape de procédé e) ne s'élève à pas plus de 15 % en poids.

13. Procédé selon une ou plusieurs des revendication 1 à 12,
caractérisé en ce qu'
on ajoute aux composants à mélanger mis en oeuvre dans l'étape de procédé b) des adjuvants de traitement du groupe des adjuvants de pressage, des adjuvants d'écoulement, des adjuvants de mouillage, des émulsionnants, des stabilisants.
